# DEMANDE DE BREVET EUROPEEN

(11) **EP 2 792 537 A1**
(43) Date de publication de la demande: **22.10.2014**
(21) Numéro de dépôt: 14163963.3
(22) Date de dépôt: 09.04.2014
(51) Int. Cl.: B60L 11/18, B60L 3/12

(54) **Procédé de sécurisation d'une borne de charge pour véhicule électrique, borne de charge sécurisée, station et système comprenant de telles bornes de charge**

(30) Priorité: 17.04.2013 FR 1353487
(71) Demandeur: Bluecarsharing, 92420 Vaucresson (FR)
(72) Inventeur: Clorennec, Yvon, 78380 Bougival (FR)
(74) Mandataire: Pontet Allano & Associes

(57) **Abrégé**

L'invention concerne un procédé de sécurisation d'une borne de charge (100) pour véhicule(s) électrique(s), ladite borne (100) comprenant un compartiment (102) dans lequel est disposé un moyen de connexion électrique (104-108) prévu pour établir une liaison électrique avec un véhicule à charger, et un capot (116) déplaçable entre une position ouverte et une position fermée. Le procédé comprend les étapes suivantes: mesure d'au moins une valeur d'au moins un paramètre relatif à la fermeture dudit capot (116), comparaison de ladite au moins une valeur mesurée dudit paramètre avec au moins une valeur seuil prédéfinie, et émission d'au moins un signal d'avertissement à destination d'un moyen externe à ladite borne (100) et/ou d'un moyen interne (148) à ladite borne (100), lorsque ladite comparaison fournit une anomalie.

## Description

La présente invention concerne un procédé de sécurisation d'une borne de charge pour véhicule électrique. Elle concerne également une borne de charge sécurisée selon ledit procédé, ainsi qu'une station de charge et un système comprenant au moins une telle borne de charge pour véhicules électriques.

Le domaine de l'invention est le domaine de la recharge des batteries d'un véhicule électrique au moyen d'une borne de charge et plus particulièrement le domaine de la recharge de véhicules proposés à une utilisation partagée.

### Etat de la technique

On connait actuellement des véhicules fonctionnant avec une ou plusieurs batteries électriques et des bornes, dites de charge, permettant de recharger les batteries des véhicules lorsque le véhicule est en stationnement.

On connaît des bornes de charge comprenant un compartiment technique comportant un moyen de connexion prévu pour connecter électriquement un véhicule à la borne de charge. La borne de charge comprend également un capot ou un couvercle, mobile en rotation, pour autoriser l'accès au compartiment technique dans une position ouverte et interdire l'accès au compartiment technique dans une position fermée. Pour faciliter son utilisation, la borne comprend des moyens de verrouillage du capot en position ouverte. En outre, pour éviter que le capot ne reste ouvert suite à un oubli de l'utilisateur et que le compartiment technique ne soit exposé, les moyens de verrouillage en position ouverte du capot sont désactivés au bout d'un certain temps. Le capot se ferme alors à l'aide d'un moyen de guidage ou d'amortissement, tel qu'un vérin.

Cependant, il se peut que, du fait des manipulations du capot par l'utilisateur, par exemple un utilisateur qui va tenter de le refermer en forçant le mécanisme, ou du fait de l'usure mécanique normale, les moyens d'amortissement ou les moyens de verrouillage en position ouverte soient endommagés. Lorsque l'utilisateur est encore présent au voisinage de la borne et que ses doigts se trouvent dans le compartiment technique, il se peut alors que la fermeture intempestive du capot engendre une blessure de l'utilisateur, ce qui représente un danger et une insécurité pour l'utilisateur.

Un but de l'invention est de remédier aux inconvénients précités.

Un autre but de l'invention est de proposer un procédé améliorant la sécurité des utilisateurs d'une borne de charge et une borne de charge plus sécurisée.

Encore un autre but de l'invention est de proposer un procédé améliorant la sécurité des utilisateurs d'une borne de charge de manière simple et peu coûteuse.

### Exposé de l'invention

L'invention propose d'atteindre au moins l'un des buts précités par un procédé de sécurisation d'une borne de charge pour véhicule(s) électrique(s), ladite borne comprenant :
- un compartiment, dit technique, dans lequel est disposé au moins un moyen de connexion électrique prévu pour établir une liaison électrique avec un véhicule à charger, et
- un moyen, dit capot, déplaçable entre une position ouverte laissant accès audit compartiment technique et une position fermée interdisant l'accès au compartiment technique ;
le procédé selon l'invention comprenant les étapes suivantes :
- mesure d'au moins une valeur d'au moins un paramètre relatif à la fermeture dudit capot, par exemple à l'aide d'au moins un détecteur positionné adéquatement au niveau de la borne de charge ou du capot,
- comparaison de ladite au moins une valeur mesurée dudit paramètre avec au moins une valeur seuil prédéfinie, et
- émission d'au moins un signal d'avertissement à destination d'un moyen externe à ladite borne et/ou d'un moyen interne à ladite borne, lorsque ladite comparaison fournit une anomalie.

Ainsi, le procédé selon l'invention permet de détecter un dysfonctionnement au niveau de la borne de charge, en particulier au niveau du capot du compartiment technique, et :
- de le signaler rapidement et de façon automatique à un opérateur de maintenance afin que celui-ci vienne vérifier la borne et remplacer éventuellement les éléments défectueux et/ou
- d'agir directement sur la borne ou sur un élément de la borne pour empêcher que les conditions dans lesquelles l'utilisateur peut se blesser soient réunies.

Avec le procédé selon l'invention, les risques de blessure d'un utilisateur et les dangers liés à une borne défectueuse sont donc limités et la sécurité des utilisateurs de la borne de charge est ainsi améliorée. La borne de charge ainsi obtenue est donc plus sécurisée pour les utilisateurs.

De plus, le procédé selon l'invention permet de sécuriser la borne de charge grâce à un ou plusieurs capteurs et un moyen de communication. Les coûts liés à une telle sécurisation restent donc faibles et la sécurisation de la borne est simple.

Le passage d'une position à l'autre du capot peut être réalisé par rotation, manuelle ou automatisée, du capot au autour d'un axe de rotation par exemple situé à son extrémité arrière.

Selon un mode de réalisation particulier, l'étape d'émission d'un signal d'avertissement peut comprendre une émission du signal d'avertissement vers un centre distant de maintenance.

En effet, le signal d'avertissement peut être émis à destination d'un dispositif de maintenance externe pour prévenir une équipe d'intervention qu'une intervention est nécessaire sur la borne, ce qui diminue le temps d'intervention pour réaliser la maintenance et évite de déplacer un opérateur de façon souvent inutile pour contrôler le fonctionnement de bornes de charge dont la majorité fonctionne correctement.

La borne de charge peut en outre comprendre :
- au moins un moyen de verrouillage du capot en position ouverte, et
- au moins un moyen de commande dudit moyen de verrouillage en position ouverte.

Dans ce cas, alternativement au mode de réalisation précédemment décrit, ou en plus, l'étape d'émission d'un signal d'avertissement peut comprendre une émission dudit signal d'avertissement au moyen de commande pour désactiver ledit moyen de verrouillage du capot en position ouverte, de sorte que le capot n'est plus verrouillé lorsqu'il est positionné en position ouverte.

Par conséquent, l'utilisateur est obligé de tenir le capot en position ouverte et est au courant qu'il y a une défaillance au niveau de la borne. Ainsi, il peut faire preuve d'une plus grande précaution pour ne pas se blesser.

Plus généralement, l'étape d'émission peut comprendre une émission du signal d'avertissement audit moyen de commande pour changer les conditions de verrouillage du capot en position ouverte. Cela permet d'éviter que les conditions soient réunies pour que l'utilisateur ne se blesse avec la borne.

Le moyen de verrouillage en position ouverte peut comprendre au moins un moyen de verrouillage magnétique tel qu'un électroaimant placé sur le capot, respectivement le corps de borne, et une surface métallique en regard placée sur le corps de borne, respectivement le capot, lorsque le capot est en position ouverte.

La borne de charge peut en outre comprendre :
- au moins un moyen de verrouillage du capot en position fermée, et
- au moins un moyen de commande dudit moyen de verrouillage en position fermée ;

Dans ce cas, l'étape d'émission d'un signal d'avertissement peut comprendre une émission dudit signal d'avertissement audit moyen de commande pour activer ledit moyen de verrouillage du capot en position fermée, de sorte que le capot est verrouillé en position fermée à tout moment.

Par conséquent, le capot ne peut plus être ouvert par l'utilisateur, qui ne peut plus accéder au compartiment technique, il est ainsi protégé contre les risques de blessure pouvant être causés par le dysfonctionnement du capot.

Le moyen de verrouillage du capot en position fermée peut comprendre au moins un moyen de verrouillage magnétique tel qu'un électroaimant placé sur le capot, respectivement le corps de borne, et une surface métallique en regard placée sur le corps de borne, respectivement le capot, lorsque le capot est en position fermée.

La borne de charge peut en outre comprendre au moins un moyen de signalisation lumineux externe visible des utilisateurs, et en particulier lorsque ceux-ci se trouvent à distance de la borne de charge.

Dans ce cas, le procédé selon l'invention peut en outre comprendre une étape d'émission d'un signal vers ledit moyen de signalisation lumineux pour changer une signalisation réalisée, ou pour initier une signalisation prédéterminée, ou encore pour arrêter la signalisation réalisée, en vue d'informer les utilisateurs que la borne est inactive ou inutilisable.

Cette caractéristique est particulièrement intéressante lorsque le capot reste toujours en position fermée, et que les utilisateurs ne peuvent accéder au compartiment technique. Elle n'est cependant pas limitée à cet usage.

Avantageusement, l'étape de mesure d'un paramètre relatif à la fermeture du capot peut comprendre une mesure d'une durée de fermeture du capot et/ou d'une vitesse de fermeture du capot.

Selon un exemple de réalisation, la mesure de la durée de fermeture du capot peut comprendre les opérations suivantes réalisées par exemple à l'aide de moyens de détection agencés sur la borne :
- détermination d'un temps, dit de référence, correspondant au démarrage de la fermeture du capot,
- détection, d'un temps, dit de fin, correspondant au moment où la position fermée du capot est atteinte, et
- détermination de la durée de fermeture du capot, en fonction du temps de référence et du temps de fin.

Les moyens de détection de la position fermée ou de la position ouverte du capot peuvent comprendre au moins un capteur de présence, tel qu'un capteur électromagnétique, un capteur optique, ou un contacteur mécanique adéquatement positionné sur la borne.

Le moyen de mesure d'une vitesse de fermeture du capot peut notamment comprendre un accéléromètre, par exemple placé sur le capot.

Avantageusement, l'étape de mesure peut comprendre plusieurs mesures, dans le temps, de l'au moins un paramètre relatif à la fermeture de capot. Le procédé selon l'invention peut alors comprendre en outre une mémorisation des valeurs mesurées et l'étape d'émission d'un signal d'avertissement peut être réalisée lorsque l'étape de comparaison fournit une anomalie pour plusieurs valeurs mesurées, notamment mesurées successivement.

Dans ce mode de réalisation, lorsque le capot présente un dysfonctionnement ponctuel, aucun signal d'avertissement n'est émis. C'est seulement lorsque le capot présente un dysfonctionnement qui se répète plusieurs fois, en particulier de manière consécutive, que le signal d'avertissement est émis.

Ainsi, le procédé selon l'invention permet d'éviter de déplacer un opérateur pour la maintenance de la borne de charge pour une défaillance ponctuelle qui ne se répète pas dans le temps ou une mesure erronée du fait d'une manoeuvre de l'utilisateur non conforme mais qui n'endommage pas pour autant le système de fermeture de la borne.

Selon une particularité avantageuse du procédé selon l'invention, l'étape de comparaison et/ou d'émission d'un signal d'avertissement peu(ven)t) être réalisée(s) par un dispositif externe relié/connecté à la borne de charge, en particulier par une borne, dite centrale, se trouvant notamment sur le même site que ladite borne de charge.

Lorsque des valeurs mesurées sont mémorisées, telles que décrites précédemment, cette mémorisation peut également être réalisée par le dispositif externe, en particulier par la borne centrale.

La borne centrale peut par exemple être une autre borne de charge, définie comme étant centrale par l'architecture de la station ou par logiciel, ou être une borne ne permettant pas un chargement électrique d'un véhicule électrique.

Selon un autre aspect de l'invention il est proposé une borne de charge d'un véhicule électrique comprenant :
- un compartiment, dit technique, dans lequel est disposé au moins un moyen de connexion électrique prévu pour établir une liaison électrique avec un véhicule à charger,
- un moyen, dit capot, déplaçable entre une position ouverte laissant accès audit compartiment technique et une position fermée interdisant l'accès au compartiment technique ; et
- des moyens configurés pour mettre en oeuvre toutes les étapes du procédé selon l'invention.

Autrement dit, la borne de charge comprend également au moins :
- un détecteur pour la mesure d'au moins une valeur d'au moins un paramètre relatif à la fermeture dudit capot, et
- des moyens de communication permettant l'émission d'au moins un signal d'avertissement à destination d'un moyen externe à ladite borne et/ou d'un moyen interne à ladite borne, en fonction des valeurs mesurées.

La borne peut également comprendre des moyens de comparaison des valeurs mesurées avec des valeurs de seuil. Un tel moyen est toutefois optionnel.

Le moyen pour émettre un signal d'avertissement peut comprendre des moyens de communication avec ou sans fil avec un dispositif externe, par exemple un module 3G ou un module TCP/IP ou encore un module utilisant un bus de communication, dit bus de terrain, de type Jbus, MODBUS, Profibus ou un moyen d'émission d'un signal, tel qu'un calculateur, à destination de moyens de commande de moyen de verrouillage en position ouverte ou fermée et/ou des moyens de signalisation lumineuse, ou encore un autre élément/organe de la borne.

Le moyen de comparaison peut comprendre des moyens d'exécution de programme informatique, configuré pour effectuer l'étape de comparaison d'au moins une valeur mesurée avec une ou des valeurs de seuil. Un tel moyen peut être un microprocesseur par exemple.

La borne de charge peut éventuellement comprendre des moyens de mémorisation de données, à savoir notamment des valeurs mesurées ou des valeurs de seuil préenregistrées, tels qu'un bloc mémoire.

Avantageusement, la borne de charge selon l'invention peut en outre comprendre au moins un moyen d'amortissement de la fermeture du capot, lorsque le capot passe de la position ouverte à la position fermée.

Selon un exemple de réalisation non limitatif, un tel moyen d'amortissement peut comprendre un vérin agencé entre un corps de borne et le capot, éventuellement associé à au moins une plaque de renfort fixée, par exemple, en au moins trois points distincts sur le capot pour répartir les contraintes appliquées sur le vérin en cas de fermeture forcée du capot en vue d'éviter un endommagement trop rapide du moyen d'amortissement.

Selon une particularité avantageuse, la borne selon l'invention peut comprendre au moins un moyen élastique, tel qu'une mousse élastomère, au voisinage d'au moins une paroi ou un bord du compartiment technique.

Cela permet de dissuader un utilisateur de poser sa main au niveau de cet endroit critique et ainsi de constituer une situation à risque dans laquelle il pourrait se blesser dans le cas d'un dysfonctionnement du capot.

De plus, dans le cas où le capot se fermerait suite à un dysfonctionnement alors que l'utilisateur a placé sa main dans la zone de fermeture, le moyen élastique, en particulier la mousse élastomère, contribue à amortir l'arrêt du capot et donc diminuer l'intensité du pincement du doigt ou de la main de l'utilisateur. De préférence, afin de remplir cet objectif, la mousse dépasse du compartiment technique en direction du capot.

En outre, le moyen élastique permet d'augmenter la surface de contact entre le capot et la main, et diminue la pression appliquée sur la main et donc le risque de blessures.

Selon encore un autre aspect de l'invention, il est proposé une station de charge pour véhicule électrique comprenant au moins une, en particulier plusieurs borne(s) de charge selon l'invention.

Une telle station peut être une station prévue pour charger les véhicules électriques, et/ou une station de prise/dépose de véhicules électriques proposés à une utilisation partagée.

Dans une version particulière, la station selon l'invention peut en outre comprendre :
- une pluralité de bornes de charge selon l'invention, et
- une borne, dite centrale, comprenant :
   - au moins un moyen de communication avec chacune desdites bornes de charge, et
   - au moins un moyen de communication avec un dispositif, dit de maintenance, distant de ladite station pour envoyer des données relatives au fonctionnement du capot de chacune desdites bornes de charge.

Un tel dispositif de maintenance externe peut être un serveur distant disposé au niveau d'un site de maintenance, et accessible au travers d'un réseau de communication de type Internet ou 3G.

La station selon l'invention peut comprendre au moins un moyen de mémorisation de données et/ou au moins un moyen de comparaison pour comparer au moins une valeur de paramètre de fermeture d'un capot d'une borne de charge avec une ou des valeurs de seuil.

Le moyen de mémorisation et/ou le moyen de comparaison peu(ven)t être disposé(s) dans la borne centrale. On centralise ainsi les fonctions que l'on n'est pas obligés de placer au niveau de la borne de charge, ce qui est avantageux car cela diminue le prix de revient de chacune des bornes de charge, et celui de la station.

Le moyen de comparaison peut comprendre un calculateur ou un microprocesseur

Le moyen de mémorisation est agencé pour mémoriser différentes valeurs des paramètres de fermeture ou différents signaux d'anomalie envoyé(e)s par chaque borne de charge, en particulier lorsque l'étape de comparaison est réalisée au niveau de chaque borne de charge.

Selon encore un autre aspect de l'invention, il est proposé un système de gestion et de maintenance comprenant :
- au moins une, en particulier plusieurs, borne(s) de charge selon l'invention, et/ou au moins une, en particulier plusieurs, station(s) de charge selon l'invention, et
- un dispositif, dit de maintenance, distant de ladite au moins une borne de charge, respectivement de ladite au moins une station de charge, en communication avec ladite au moins une borne de charge, respectivement ladite au moins une station.

D'autres avantages et caractéristiques apparaîtront à l'examen de la description détaillée de modes de réalisation nullement limitatifs, et des dessins annexés sur lesquels :
- la FIGURE 1 est une représentation schématique d'une borne de charge sécurisée selon l'invention ;
- la FIGURE 2 est une représentation schématique d'un système de gestion et de maintenance selon l'invention ; et
- la FIGURE 3 est une représentation schématique sous la forme d'un diagramme d'un exemple de procédé de sécurisation d'une borne de charge selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et modes de réalisation décrits sont combinables entre eux si rien ne s'oppose à cette combinaison sur le plan technique.

Les éléments communs à plusieurs figures conservent la même référence.

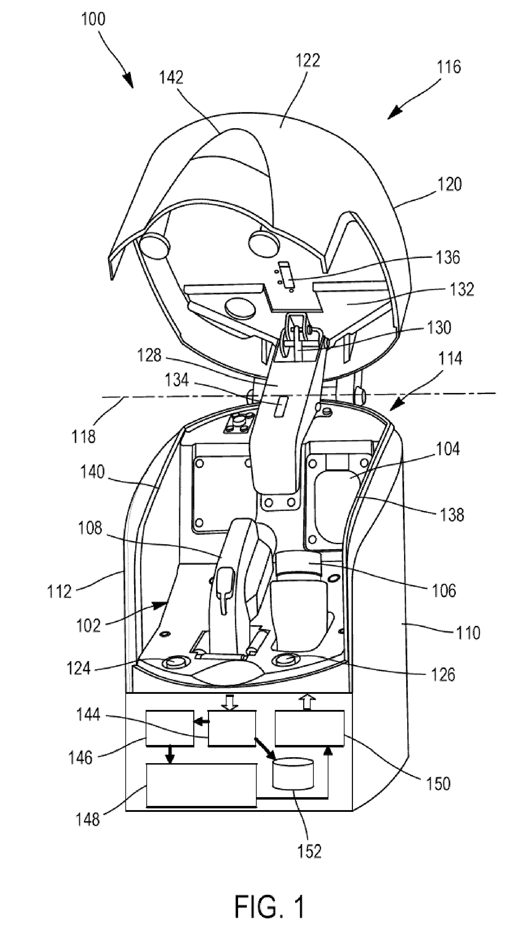

La FIGURE 1 est une représentation schématique d'un exemple de borne de charge sécurisée selon l'invention.

La borne de charge 100 représentée sur la FIGURE 1 comprend un corps arrondi et allongé verticalement.

La borne de charge 100 comprend un compartiment technique 102 formant une zone technique en partie supérieure du corps de la borne 100. Le compartiment technique 102 comprend d'une part un connecteur 104 de type femelle protégé par un cache et d'autre part un câble comprenant deux connecteurs 106 et 108 de type mâle à chacune de ses extrémités. Les connecteurs mâles 106 et 108 peuvent être saisis par l'utilisateur. Le connecteur mâle 106 est complémentaire du connecteur femelle 104 du compartiment technique 102, et le connecteur mâle 108 est destiné à être mis en place dans un véhicule, plus particulièrement connecté à un connecteur de type femelle aménagé sur un véhicule électrique à charger.

Le compartiment technique 102 est bordé par deux parois latérales 110, 112 l'entourant et une paroi arrière 114.

La borne de charge 100 comprend également un capot 116 articulé sur l'extrémité supérieure de la paroi arrière du corps de borne 100. Le capot 116 est mobile en rotation autour d'un axe 118 essentiellement horizontal, entre une position ouverte dans laquelle il autorise l'accès libre à au compartiment technique 102 et une position fermée dans laquelle il empêche l'accès au compartiment technique 102. Le capot 116 comprend une paroi supérieure 120 essentiellement horizontale et une paroi avant 122 essentiellement verticale s'étendant à l'avant de la borne 100, lorsque le capot 116 se trouve dans la position fermée.

La borne de charge 100 comprend en outre des moyens de verrouillage du capot 116 lorsque celle-ci se trouve en position fermée, du type magnétique, comprenant deux électroaimants 124 et 126 en partie avant du compartiment technique 102 coopérant avec l'extrémité inférieure de la paroi avant 122 du capot 116.

La borne de charge 100 comprend également des moyens de verrouillage du capot 116 lorsque celle-ci se trouve en position ouverte, comprenant un électroaimant (non visible), disposé en partie supérieure de la paroi arrière 114 du compartiment technique 102 et coopérant avec une pièce métallique 128 destinée à être placée contre cet électroaimant lorsque le capot 116 atteint sa position ouverte.

La borne de charge 100 comprend également des moyens d'amortissement de la fermeture du capot 116, comprenant un vérin à gaz 130 dont une partie est reliée à la partie supérieure du corps de la borne 100 alors que l'autre partie est reliée au capot 116. Le vérin 130 s'oppose à l'action de la gravité s'exerçant sur le capot 116 et ralentit donc la fermeture du capot 116.

Le vérin 130 est relié au capot 116 par l'intermédiaire d'une plaque de renfort 132 fixée au capot 116 en de nombreux points, permettant ainsi de répartir les contraintes s'exerçant sur le capot 116 lorsque l'utilisateur essaie de fermer manuellement le capot 116 et d'éviter autant que faire se peut qu'une telle fermeture, susceptible d'endommager le vérin 130, se produise.

La borne de charge 100 comporte également un moyen de détection de la position fermée du capot 116. Ce moyen de détection de la position fermée comprend un élément magnétique 134, disposé sur/dans la pièce métallique 128 et coopérant avec un capteur magnétique 136 placé sur la face interne du capot 116. Lorsque le capot 116 atteint sa position fermée, le capteur 136 disposé sur la face interne du capot 116 vient au droit l'élément magnétique 134 situé au niveau de la pièce métallique 128 à quelques millimètres de ce capteur 136, et est donc détectée par le capteur 136.

Le capteur magnétique 136 peut être remplacé par un capteur optique ou un capteur électromécanique.

Le moyen de détection de la position fermée du capot 116 pourrait également être placé à tout autre endroit au niveau duquel le capot 116 interagit ou entre en contact avec le corps de borne 100.

La borne 100 comporte également des mousses de protection 138 et 140 longeant la face interne de chacune des parois latérales 110 et 112 délimitant le compartiment technique 102. Ces mousses de protection 138, 140 sont collées sur les faces internes des parois latérales respectives 110, 112 de la borne 100. Chacune de ces mousses 138, 140 est choisie pour dépasser du bord ou de l'extrémité supérieure de la paroi latérale 110, 112 sur laquelle elle est collée. Les mousses de protection 138, 140 permettent de ralentir/amortir la chute du capot 116 au voisinage de la position fermée du capot 116, et permettent à un utilisateur d'avoir le temps de retirer son doigt ou sa main le cas échéant.

Les moyens de verrouillage en position ouverte et fermée sont commandés par des moyens de commande (non représentés) notamment qui alimentent ou non les électroaimants en courant. Ces moyens de commande déclenchent l'activation des moyens de verrouillage en position ouverte ou fermée selon les cas de figure, par exemple :
- désactivation des moyens de verrouillage en position fermée 124, 126 et activation des moyens de verrouillage en position ouverte 128 lorsque l'utilisateur est autorisé à utiliser la borne 100 : en l'occurrence, après lecture d'un moyen d'identification par des moyens de lecture situés sur la borne, notamment sur la face externe du capot 116 et non décrits en détails ici. L'ouverture du capot 116 est ainsi autorisée et le capot 116 est maintenu en position ouverte une fois disposé en position ouverte par l'utilisateur,
- lorsque le câble est branché dans un véhicule ou qu'il est remis en place dans son logement, après une période de temps prédéterminée, activation des moyens de verrouillage en position fermée 124 et 126 et désactivation des moyens de verrouillage en position ouverte 128, pour permettre la retombée du capot 116 en position fermée par gravité et son verrouillage en position fermée. La période de temps prédéterminée est choisie de sorte qu'à la fin de celle-ci, l'utilisateur a fini d'utiliser le compartiment technique 102 dans la plupart des cas.

La borne de charge 100 comprend en outre au moins un moyen 142 de signalisation lumineuse, visible de l'extérieur de la borne, préférentiellement lorsque l'utilisateur se trouve à distance de la borne pour signaler un état de fonctionnement ou notamment une anomalie de la borne 100 et en particulier du capot 116. Le moyen de signalisation 142 est disposé sur le corps de la borne 100, en particulier sur la face extérieure de la paroi de devant 122 du capot 116.

La borne de charge 100 représentée sur la FIGURE 1 comprend en outre un module 144 de mesure d'un paramètre relatif à la fermeture du capot 116. Ce module de mesure 144 peut être un calculateur ou un processeur. Le module de mesure 144 est relié d'une part aux moyens de détection 134, 136 de la position fermée du capot 116 et d'autre part aux moyens de verrouillage en position ouverte du capot 116, à savoir la pièce métallique 128 et l'électroaimant décrits plus haut, et éventuellement aux moyens de maintien en position fermée du capot 116, à savoir les aimants 124, 126. Le module de mesure 144 permet de mesurer par exemple la vitesse ou le temps de fermeture du capot 116.

La borne de charge 100 comprend également un module de comparaison 146, avec une ou plusieurs valeurs prédéterminées, de la valeur mesurée d'un paramètre relatif à la fermeture du capot 116, et un module de communication 148.

En fonction du résultat de la comparaison d'une ou plusieurs valeurs mesurées, par exemple successivement, d'au moins un paramètre relatif à la fermeture du capot 116, le module de communication 148 permet d'émettre un signal d'avertissement ou d'anomalie vers :
- un dispositif externe et/ou
- un module de commande 150 des moyens de verrouillage 128 du capot en position ouverte et/ou des moyens de verrouillage 124, 126 du capot 116 en position fermée et/ou du moyen de signalisation 142.

Le module de commande 150 commande chacun des moyens de verrouillage décrits, en particulier active et/ou désactive chacun des moyens de verrouillage pour que le capot 116 ne soit plus verrouillé en position ouverte ou que le capot 116 soit bloqué en position fermée à tout moment. Le module de commande 150 contrôle également le moyen de signalisation 142 pour initier/modifier/arrêter une signalisation réalisée par le moyen de signalisation 142 pour informer visuellement les utilisateurs de l'état de fonctionnement de la borne 100 ou du capot 116.

La borne de charge 100 peut également comprendre des moyens de mémorisation 152 de données, notamment des valeurs mesurées ou des valeurs de seuil préenregistrées du ou des paramètres relatifs à la fermeture du capot 116.

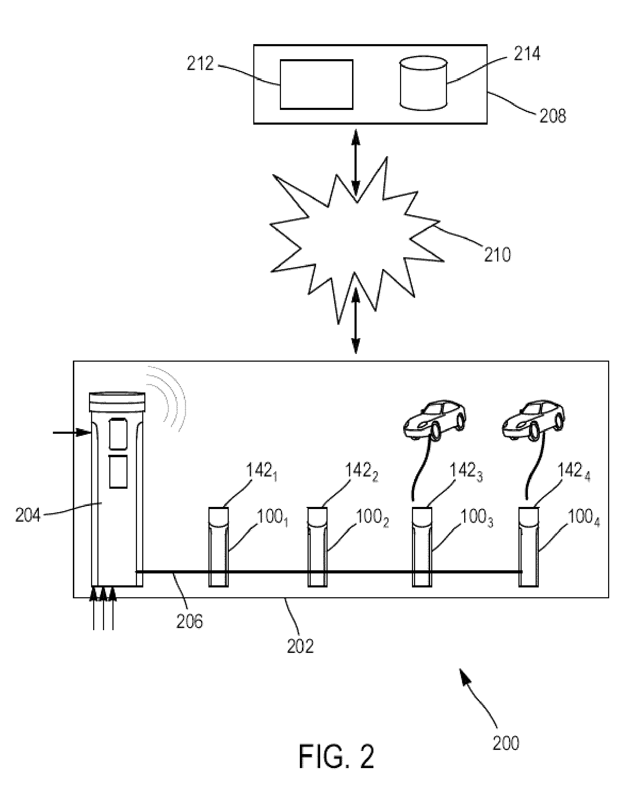

La FIGURE 2 est une représentation schématique d'un système selon l'invention.

Le système 200 représenté sur la FIGURE 2 comprend une station 202 permettant la charge de véhicules électriques, et préférentiellement une station de prise et/ou dépose automatisée de véhicules électriques proposés à une utilisation partagée, éventuellement sous la forme d'une location automatisée de véhicules.

La station 202 comprend plusieurs bornes de charge 100₁-100₄ ainsi qu'une borne 204, dite centrale ou de location, reliée par une connexion filaire 206 à chaque borne de charge 100₁-100₄. Chaque borne de charge 100₁-100₄ comprend un moyen de signalisation 142₁-142₄.

La borne de location 204 comprend une unité centrale (non représentée) comprenant notamment des moyens de stockage de données, ainsi que des moyens d'exécution de programmes informatiques tels qu'un processeur. La borne de location 204 comprend également des moyens de communication, notamment sans fil, par le biais d'un réseau GPRS avec des moyens distants tels qu'un terminal de maintenance situé dans un centre de maintenance ou dans un site distant.

La borne de location 204 peut également comprendre de nombreuses fonctionnalités. Elle peut servir notamment d'interaction avec l'utilisateur pour lui permettre de souscrire un abonnement ou d'effectuer un paiement si nécessaire. Mais ces fonctionnalités ne nous intéressent pas dans le contexte de la présente invention et ne seront pas décrites plus en détails.

Le système 200 comprend en outre un site distant 208, qui peut être un centre de maintenance, en communication avec la station 202 au travers d'un réseau de communication 210 de type GPRS ou Internet. Le centre de maintenance 208 comprend un dispositif de maintenance 212, par exemple un serveur. Le centre de maintenance 208 peut également comprendre un moyen de mémorisation de données tel qu'une base de données 214.

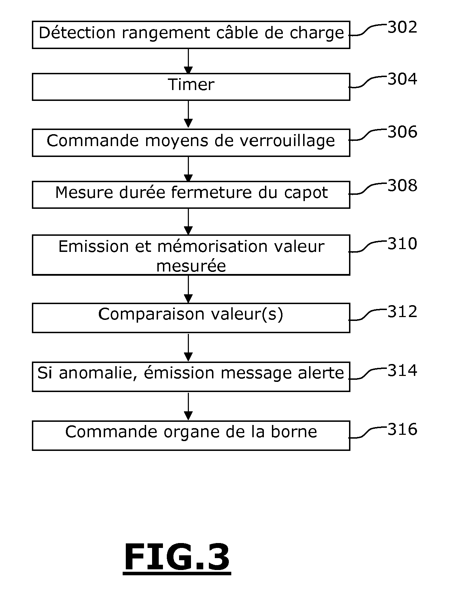

La FIGURE 3 est une représentation schématique sous la forme d'un diagramme d'un exemple de procédé selon l'invention.

Lors d'une étape 302, l'utilisateur débranche le câble de charge du véhicule et place le câble dans son logement dans la borne de charge, le fait que le câble ait été débranché du véhicule ou ait été rangé est détecté.

A l'étape 304, un timer se met en route, par exemple de 30 secondes.

A la fin du timer, lors d'une étape 306, après que le câble a été remis en place, le(s) moyen(s) de commande des moyens de verrouillage commandent l'activation des moyens de verrouillage en position fermée et la désactivation des moyens de verrouillage en position ouverte.

A partir du moment où cette commande est déclenchée, lors d'une étape 308, un nouveau timer est déclenché, ce timer s'arrêtant lorsque la fermeture complète du capot est détectée, c'est-à-dire lorsque le capot passe en position fermée. Autrement dit, ce timer mesure la durée de fermeture du capot. Le début de la durée mesurée correspond au déclenchement du timer, à savoir la désactivation des moyens de verrouillage, alors que la fin de la durée mesurée correspond à l'atteinte de la position fermée par le capot, détectée par le détecteur tel que décrit plus haut.

La durée alors mesurée par le timer est alors transmise à la borne de location qui l'enregistre, lors d'une étape 310. Si le timer compte plus d'un temps prédéterminé, par exemple 20 secondes, le comptage est arrêté et la valeur mesurée est déclarée erronée. Il est également possible de ne transmettre aucune donnée à la borne de location ou transmettre une donnée du type « mesure erronée » lors de l'étape 308.

A chaque nouvelle mesure reçue par la borne de location, la borne compare, lors d'une étape 312, la valeur mesurée reçue et éventuellement les valeurs mesurées précédemment et enregistrées, à des durées de seuil, stockées également en mémoire locale ou transmises par un dispositif central distant, également appelé dispositif de maintenance, par exemple sur demande de la borne de location.

Si des conditions prédéterminées sont remplies, la borne de location construit un message d'alerte et le transmet, lors d'une étape 314, par le biais d'une connexion de données au dispositif de maintenance distant situé dans un centre de maintenance.

La borne de location peut également stocker une variable relative à l'état du couvercle, par exemple « état du vérin », qu'elle met à jour après chaque mesure et/ou transmettre à un module central du système.

En fonction de la valeur de la variable « état du vérin », lors d'une étape 316, la borne de location peut également commander différents moyens de la borne (moyens de verrouillage en position fermée, moyens de signalisation lumineuse) pour rendre le compartiment technique de la borne inaccessible (afin d'éviter toute blessure de l'utilisateur) et également informer l'utilisateur que ladite borne est inaccessible.

La borne de location peut vérifier plusieurs conditions lors de l'étape de comparaison et envoyer un message différent en fonction des conditions remplies. Il est également possible qu'en fonction des conditions remplies, la borne de location envoie des messages (identiques ou différents) à des dispositifs de maintenance différents.

Nous allons maintenant décrire, ci-dessous, un exemple des conditions vérifiées et des messages envoyés. Evidemment, la nature des conditions vérifiées et/ou des messages envoyés pourraient être tout autre en fonction des circonstances. Notons x la durée mesurée pour la fermeture du capot :
Si 5 fois de suite : x=0 :
   Alerte = électroaimant défectueux ou capteur défectueux
Si 2 fois de suite (sans compter les x=0) : 0 < x < T1 :
   Alerte = Vérin défectueux : Borne dangereuse :
      - Emission d'un message au dispositif de maintenance demandant une intervention immédiate au niveau de la borne
      - blocage du capot en position fermée et commande des moyens de signalisation lumineuse.
Si 3 fois de suite (sans compter les x=0) : T1 < x < T2
Alerte = Vérin faible : remplacement recommandé : Emission message au dispositif de maintenance indiquant qu'une vérification de la borne dans les jours suivants est nécessaire.
Si 3 fois de suite (sans compter les x=0) : T2 < x < Timeout :
   Pas d'alerte : retour à l'état OK

Les valeurs T1, T2 et Timeout sont bien entendu configurables et modifiables alors que le système et en particulier la station et les bornes de charge ont déjà été mises en fonctionnement. Un exemple de valeurs est le suivant :
T1= 0.6 secondes, T2 = 1 seconde, et Timeout = 20 secondes.

Comme indiqué plus haut, en variante, le système ou la station selon l'invention pourrait comprendre une unique borne et seulement des moyens pour émettre un signal d'avertissement vers d'autres moyens de la borne sans envoi de messages vers un dispositif externe.

Les moyens de mémorisation de données et/ou les moyens de comparaison peuvent être placés dans la borne de charge, dans la borne de location ou à distance dans le dispositif de maintenance.

Les moyens de mesure du ou des paramètres relatifs à la fermeture du capot peuvent comprendre en plus ou alternativement des moyens de mesure de la vitesse de la fermeture du couvercle.

Les moyens d'amortissement de la fermeture du capot peuvent être des moyens d'autre type. Ils pourraient comprendre des moyens tels qu'un moteur pas à pas coopérant avec une vis sans fin relié au capot par une rotule par exemple. L'ensemble moteur et la vis sans fin n'est pas un système passif, tel que le vérin, et il est donc possible de contrôler son déplacement. Il est ainsi moins susceptible d'être défectueux que le vérin et les moyens selon l'invention peuvent alors être choisis et agencés pour détecter un problème mécanique de type arrachement de la rotule reliant la vis sans fin au couvercle.

Les moyens de renfort et la mousse sont également des moyens optionnels.

Bien entendu l'invention n'est pas limitée aux exemples qui viennent d'être décrits.

## Revendications

1. Procédé (300) de sécurisation d'une borne de charge (100) pour véhicule(s) électrique(s), ladite borne (100) comprenant :
- un compartiment (102), dit technique, dans lequel est disposé au moins un moyen de connexion électrique (104-108) prévu pour établir une liaison électrique avec un véhicule à charger, et
- un moyen (116), dit capot, déplaçable entre une position ouverte laissant accès audit compartiment technique (102) et une position fermée interdisant l'accès au compartiment technique (102) ;
ledit procédé (300) comprenant les étapes suivantes :
- mesure (308) d'au moins une valeur d'au moins un paramètre relatif à la fermeture dudit capot (116),
- comparaison (312) de ladite au moins une valeur mesurée dudit paramètre avec au moins une valeur seuil prédéfinie, et
- émission (314,316) d'au moins un signal d'avertissement à destination d'un moyen externe (204,212) à ladite borne (100) et/ou d'un moyen interne (148) à ladite borne, lorsque ladite comparaison fournie une anomalie ;
ledit procédé étant **caractérisé en ce que** ladite étape de mesure (308) comprend une mesure d'une durée de fermeture du capot (116) et/ou d'une vitesse de fermeture du capot (116), ladite étape de comparaison (312) étant réalisée en fonction de ladite durée de fermeture et/ou de ladite vitesse de fermeture du capot (116).

2. Procédé (300) selon la revendication 1, **caractérisé en ce que** l'étape d'émission (310) comprend une émission du signal d'avertissement vers un centre distant de maintenance (208).

3. Procédé (300) selon l'une quelconque des revendications précédentes, **caractérisé en ce que** la borne (100) comprend :
- au moins un moyen (128) de verrouillage du capot (116) en position ouverte, et/ou un moyen (124,126) de verrouillage du capot (116) en position fermée,
- au moins un moyen de commande (150) dudit moyen de verrouillage (128) en position ouverte et/ou dudit moyen (124, 126) de verrouillage en position fermée.

4. Procédé selon la revendication précédente, dans lequel l'étape d'émission (314, 316) comprend une émission (316) dudit signal d'avertissement audit moyen de commande (150) pour désactiver ledit moyen de verrouillage en position ouverte (128), de sorte que ledit capot (116) n'est plus verrouillé lorsqu'il est positionné en position ouverte, et/ou pour activer ledit moyen de verrouillage (124,126) en position fermée, de sorte que ledit capot (116) est verrouillé en position fermée à tout moment.

5. Procédé (300) selon l'une quelconque des revendications précédentes, **caractérisé en ce que** la borne de charge (100) comprend en outre au moins un moyen (142) de signalisation lumineux externe visible des utilisateurs, et en particulier lorsque celui-ci se trouve à distance, le procédé (300) comprenant en outre une étape (316) d'émission d'un signal vers ledit moyen de signalisation lumineux (142) pour changer une signalisation réalisée en vue d'informer les utilisateurs que la borne de charge (100) est inactive ou inutilisable.

6. Procédé (300) selon l'une quelconque des revendications précédentes, **caractérisé en ce que** l'étape de mesure (308) comprend plusieurs mesures, dans le temps, de l'au moins un paramètre relatif à la fermeture de capot (116), ledit procédé comprenant en outre une mémorisation (310) des valeurs mesurées, l'étape d'émission d'un signal d'avertissement (314,316) étant réalisée lorsque l'étape de comparaison (312) fournit une anomalie pour plusieurs valeurs mesurées, notamment successives.

7. Procédé (300) selon l'une quelconque des revendications précédentes, **caractérisé en ce que** l'étape de comparaison (312) et/ou d'émission (314,316) d'un signal d'avertissement est(sont) réalisée(s) par un dispositif externe (204,212) relié/connecté à la borne de charge (100), en particulier par une borne (204), dite centrale, se trouvant sur le même site que ladite borne de charge (100).

8. Borne de charge (100) d'un véhicule électrique comprenant :
- un compartiment (102), dit technique, dans lequel est disposé au moins un moyen de connexion (104-108) électrique prévu pour établir une liaison électrique avec un véhicule à charger,
- un moyen (116), dit capot, déplaçable entre une position ouverte laissant accès audit compartiment technique (102) et une position fermée interdisant l'accès audit compartiment technique (102)
- un détecteur (134, 136) pour la mesure d'au moins une valeur d'au moins un paramètre relatif à la fermeture dudit capot (116), et
- des moyens de communication (148) permettant l'émission d'au moins un signal d'avertissement à destination d'un moyen externe à ladite borne et/ou d'un moyen interne (150) à ladite borne, en fonction des valeurs mesurées ;
ledit détecteur (134,136) comprenant au moins un moyen configuré pour mesurer une durée de fermeture du capot (116) et/ou une vitesse de fermeture du capot (116).

9. Borne (100) selon la revendication précédente, **caractérisée en ce qu'**elle comprend en outre des moyens de comparaison (146) d'au moins une valeur mesurée par le détecteur avec au moins une valeur de seuil prédéterminée, et éventuellement des moyens de mémorisation de données (152) pour stocker au moins une valeur mesurée ou une valeur de seuil.

10. Borne (100) selon l'une des revendications 8 et 9, **caractérisée en ce qu'**elle comprend au moins un moyen d'amortissement de la fermeture du capot (116), lorsque le capot (116) passe de la position ouverte à la position fermée, ledit moyen d'amortissement comprenant un vérin (130) agencé entre un corps de borne (100) et ledit capot (116), associé à une plaque (132) de renfort fixée en au moins trois points distincts sur le capot (116) pour répartir les contraintes appliquées sur le vérin (130) en cas de fermeture forcée du capot (116).

11. Borne (100) selon l'une quelconque des revendications 8 à 10, **caractérisée en ce qu'**elle comprend au moins un moyen (138,140) élastique, tel qu'une mousse élastomère, au voisinage d'au moins une paroi (110, 112) ou un bord du compartiment technique (102), dépassant de préférence de l'extrémité de la paroi en direction du capot (116).

12. Station (202) de charge pour véhicule électrique comprenant au moins une borne (100₁-100₄) de charge selon l'une quelconque des revendications 8 à 11.

13. Station (202) selon la revendication précédente, **caractérisée en ce qu'**elle comprend :
- une pluralité de bornes de charge (100₁-100₄) selon l'une quelconque des revendications 8 à 11, et
- une borne (204), dite centrale, comprenant :
- au moins un moyen de communication avec chacune desdites bornes de charge (100₁-100₄), et
- au moins un moyen de communication avec un dispositif (212), dit de maintenance, distant de ladite station (202) pour envoyer des données relatives au fonctionnement du capot de chacune desdites bornes de charge (100₁-100₄).

14. Station (202) selon l'une quelconque des revendications 12 ou 13, **caractérisée en ce qu'**elle comprend au moins un moyen de mémorisation de données et/ou au moins un moyen de comparaison pour comparer au moins une valeur de paramètre de fermeture d'un capot d'une borne de charge (100₁-100₄) avec un ou des valeurs de seuil.

15. Système (200) de gestion et de maintenance comprenant :
- au moins une borne de charge (100₁-100₄) selon l'une quelconque des revendications 8 à 11, ou au moins une station de charge (202) selon l'une quelconque des revendications 12 à 14, et
- un dispositif (212), dit de maintenance, distant de ladite au moins une borne de charge (100₁-100₄), respectivement de ladite au moins une station de charge (202), en communication avec lesdites bornes de charge (100₁-100₄), respectivement ladite station de charge (202).
